Europäisches Patentamt

European Patent Office

Office européen des brevets

(19)

(11) Numéro de publication : **0 189 749**
**B1**

(12)                    **FASCICULE DE BREVET EUROPÉEN**

(45) Date de publication du fascicule du brevet :
17.08.88

(21) Numéro de dépôt : **86100077.6**

(22) Date de dépôt : **04.01.86**

(51) Int. Cl.⁴ : **B 29 B 15/10**, B 29 C 53/56,
B 29 C 67/14

(54) **Ensembles renforçants comportant des fils de renfort et une matrice; procédé pour obtenir ces ensembles; articles comportant ces ensembles.**

(30) Priorité : **18.01.85 FR 8500875**

(43) Date de publication de la demande :
**06.08.86 Bulletin 86/32**

(45) Mention de la délivrance du brevet :
**17.08.88 Bulletin 88/33**

(84) Etats contractants désignés :
**AT BE CH DE FR GB IT LI LU NL SE**

(56) Documents cités :
**FR-A- 1 495 866**
**GB-A- 1 157 913**
**GB-A- 1 163 108**
**US-A- 1 914 040**
**US-A- 2 149 079**
**NASA TECH BRIEF, 5 juillet 1983, Langley Research Center, Hampton, Virginia, US; R.M. BAUCOM: "Solventless fabrication of reinforced composites"**
**PATENTS ABSTRACTS OF JAPAN, vol. 7, no. 265 (M-258) [1410], 25 novembre 1983, page 120 M 258**

(73) Titulaire : **MICHELIN & CIE (Compagnie Générale des Etablissements Michelin) Société dite:**
**4 rue du Terrail**
**F-63000 Clermont-Ferrand (FR)**

(72) Inventeur : **Bocquet, Jean-Louis**
**La Vigne-Reine**
**Artonne F-63460 Combronde (FR)**
Inventeur : **Gouttebessis, Jacques**
**24 route d'Egaules**
**Chanat-La Mouteyre F-63530 Volvic (FR)**
Inventeur : **Rey, Maurice**
**13, allée Sud La Raye-Dieu**
**F-63000 Clermont-Ferrand (FR)**

(74) Mandataire : **Doussaint, Jean-Marie et al**
**MICHELIN & CIE Service K. Brevets**
**F-63040 Clermont-Ferrand Cedex (FR)**

## Description

L'invention concerne les ensembles comportant des fils et une matrice dans laquelle sont disposés ces fils, ces ensembles étant destinés à renforcer des articles, notamment des articles en matière(s) plastique(s) ou en caoutchouc(s).

De tels ensembles peuvent former par exemple des câbles, des tringles ou des nappes destinées à renforcer des tuyaux, des courroies, des bandes transporteuses, des enveloppes de pneumatiques. Il est connu de réaliser ces ensembles en disposant des fils de renfort ou des assemblages de fils de renfort dans une matrice en matière plastique ou en caoutchouc. De tels procédés sont décrits par exemple dans les brevets suivants :

— FR-A-731 314, GB-A-424 526, GB-A-802 253, US-A-3 522 139. Le brevet GB-A-1 157 913, correspondant aux préambules des revendications 1 et 15 respectivement, décrit aussi un tel procédé dans lequel on enduit des fibres de verre avec une composition contenant un composé organosilicone, et on réalise avec ces fibres un faisceau que l'on imprègne avec une composition élastomère. Ces procédés connus présentent les inconvénients suivants :

— soit ils nécessitent l'emploi de moyens coûteux et peu fiables pour maintenir une distance fixe et déterminée entre les fils ou assemblages de fils, à l'intérieur de la matrice, par exemple des tissus, des agrafes ;

— soit ils ne permettent pas de maintenir cette distance ce qui provoque d'une part une variation de la forme géométrique de ces ensembles, d'où des performances hétérogènes, et d'autre part une usure des fils ou assemblages de fils entre eux par suite de frottements entre ces fils ou assemblages de fils, à l'intérieur de la matrice, et par suite une détérioration des articles qu'ils renforcent.

Le but de l'invention est d'éliminer les inconvénients précités. La solution à ce problème est un procédé tel qu'il est caractérisé dans la revendication principale 1, et un ensemble tel qu'il est caractérisé dans la revendication principale 15.

L'invention concerne également les ensembles complexes de renfort qui comportent chacun plusieurs ensembles conformes à l'invention, ainsi que les procédés permettant d'obtenir ces ensembles complexes.

L'invention concerne également les articles comportant des ensembles ou des ensembles complexes conformes à l'invention.

Par le terme « ensemble comportant des fils de renfort » on entend un ensemble comportant des fils de renfort indépendants, par exemple un faisceau de fils de renfort, et/ou au moins un enroulement de spires d'un fil de renfort, chaque spire de l'enroulement étant alors assimilée à un fil de renfort.

L'invention sera aisément comprise à l'aide des exemples non limitatifs qui suivent et des figures toutes schématiques relatives à ces exemples.

Sur le dessin :

— la figure 1 représente en coupe un fil entouré d'une gaine de matière I et d'une gaine de matière II ;

— la figure 2 représente en coupe un ensemble conforme à l'invention ;

— la figure 3 représente en coupe radiale une enveloppe de pneumatique comportant deux tringles dont chacune est un ensemble conforme à l'invention ;

— la figure 4 représente, vu de profil, un dispositif permettant de réaliser les tringles représentées à la figure 3, ce dispositif comportant un tambour ;

— les figures 5, 6 représentent chacune en coupe une portion du tambour représenté à la figure 4 ;

— la figure 7 représente, vu de profil, un autre dispositif permettant de réaliser les tringles représentées à la figure 3 ;

— la figure 8 représente en coupe un ensemble complexe conforme à l'invention ;

— la figure 9 représente en coupe un câble qui est un autre ensemble complexe conforme à l'invention ;

— la figure 10 représente en coupe un toron à double gainage utilisé pour la réalisation du câble représenté à la figure 9 ;

— la figure 11 représente en coupe une nappe de renfort qui est un autre ensemble complexe conforme à l'invention.

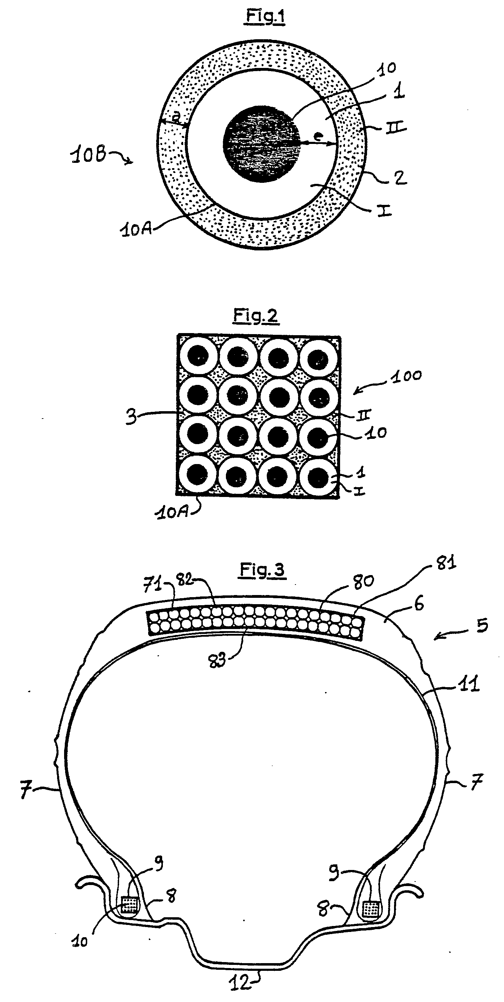

La figure 1 représente un fil 10 de renfort utilisé pour réaliser l'ensemble 100 représenté à la figure 2, les figures 1 et 2 étant des coupes effectuées perpendiculairement aux axes des fils 10 qui sont disposés parallèlement entre eux dans l'ensemble 100.

Ce fil 10 est entouré par une gaine 1 réalisée avec une matière organique I, cette gaine 1 se trouvant directement au contact du fil 10, et par une gaine 2 de matière organique II, cette gaine 2 se trouvant directement au contact de la gaine 1. Les matières I et II sont par exemple des matières thermoplastiques telles que la température de fusion de la matière I soit supérieure à la température de fusion de la matière II.

Pour la clarté de la description plusieurs indices et appellations sont utilisés concernant le fil 10, et ceci de la façon suivante :

— le fil lui-même est référencé 10 ;

— la combinaison du fil 10 et de sa gaine 1 solide est appelée « fil gainé 10A » ;

— la combinaison du fil 10 et de ses gaines 1, 2, solides est appelée « fil gainé 10B » (figure 1) ;

— la combinaison du fil 10, de sa gaine 1 solide et d'une gaine en matière II liquide ou pâteuse, par exemple après fusion de la gaine 2, est appelée « fil gainé 10C ».

La réalisation des gaines 1 et 2 s'effectue par exemple à l'aide de deux extrusions successives autour du fil 10, la première extrusion donnant la gaine 1 et donc le fil gainé 10A et la deuxième extrusion donnant la gaine 2 et donc le fil gainé 10B lorsque la gaine 2 est solide, la matière du fil 10 restant solide lorsque les matières I ou II sont à l'état fondu.

Ces deux extrusions peuvent être réalisées de façon discontinue, par exemple avec deux appareillages séparés, ou en continu, notamment avec un appareillage unique comportant une tête d'extrusion avec deux alimentations distinctes pour les matières I et II. Dans tous les cas, l'extrusion de la gaine 2 sur la gaine 1 doit être effectuée lorsque la matière I est solide, c'est-à-dire que la gaine 2 doit être extrudée sur le fil gainé 10A.

L'ensemble 100 comporte plusieurs fils 10A, c'est-à-dire plusieurs fils 10 entourés chacun individuellement par une gaine 1, et une matrice 3 dans laquelle sont disposés les fils gainés 10A. Cette matrice 3 est constituée par la matière II des gaines 2 précédemment décrites.

La réalisation de l'ensemble 100 est effectuée par exemple de la façon suivante. On provoque la fusion de la matière II de la gaine 2 tout en maintenant la gaine 1 à l'état solide de façon à obtenir le fil gainé 10C. Cette opération peut être réalisée par exemple en faisant passer le fil gainé 10B dans un four ou un tunnel que l'on chauffe de telle sorte que la température atteinte par la matière II soit supérieure à la température de fusion de cette matière II mais inférieure à la température de fusion de la matière I. Le chauffage peut être réalisé par tout moyen connu, par exemple avec des rayons infrarouges. On groupe alors ensuite en les mettant les uns contre les autres plusieurs fils 10C constitués chacun par un fil 10 entouré par la gaine 1 solide et par la matière II fondue et on provoque la migration de la matière II fondue dans les vides entre les fils gainés 10A de façon à remplir ces vides avec la matière II liquide ou pâteuse, tandis que la matière I reste solide pendant cette migration. Cette migration est obtenue par exemple par une pression exercée sur les fils 10C.

On refroidit alors et la matière II se solidifie pour donner la matrice 3, on obtient ainsi l'ensemble 100 fini. Grâce au procédé précédemment décrit, les fils 10 restent séparés les uns des autres étant donné que les gaines 1 solides évitent tout contact direct entre les fils 10 pendant la réalisation de l'ensemble 100. Les gaines 1 de deux fils 10A voisins sont en contact entre elles, c'est-à-dire que la distance entre deux fils 10 voisins est constante et égale à 2e, e étant l'épaisseur de chaque gaine 1 solide, les fils gainés 10A étant ainsi en contact les uns avec les autres. Il est facile de choisir l'épaisseur « e » (fig. 1), c'est-à-dire l'épaisseur de la gaine 1, pour garantir une distance donnée 2e entre deux fils 10 voisins, et il est facile aussi de choisir la quantité de matière II pour les gaines 2 telle qu'après fusion la matière II remplisse les vides entre les fils gainés 10A, c'est-à-dire entre les gaines 1 qui servent en quelque sorte de cales entre les fils 10, lors de la réalisation de l'ensemble 100. Dans l'ensemble 100 terminé, la matrice 3 remplit donc tous les espaces entre les fils gainés 10A. La quantité de matière II est déterminée par l'épaisseur « a » de la gaine 2 (figure 1), compte tenu du diamètre du fil gainé 10A.

Le procédé conforme à l'invention permet d'obtenir de façon simple et économique une forme géométrique déterminée pour l'ensemble 100, avec une distance constante entre les fils 10 qui sont dépourvus de contact direct entre eux grâce aux gaines 1. On obtient ainsi des performances homogènes pour cet ensemble 100, en évitant les risques d'usure des fils entre eux.

Les fils 10 peuvent être réalisés avec une matière métallique comme l'acier, ou une matière non métallique, par exemple une matière minérale, comme le verre, ou une matière organique, comme un polyester, un polyamide non aromatique ou aromatique. L'invention permet aussi d'éviter la corrosion lorsque les fils 10 sont métalliques.

Les matières organiques I et II peuvent être autres que thermoplastiques, c'est ainsi par exemple qu'au moins une de ces matières peut être une matière vulcanisable ou durcissable, par exemple un caoutchouc, une résine durcissable, notamment une résine phénolique, une résine epoxy, la matière II, lors de la réalisation de l'ensemble 100, se présentant sous un état liquide ou pâteux avant vulcanisation ou durcissement de façon à migrer entre les fils gainés 10A, et on provoque ensuite la vulcanisation ou le durcissement de la matière II qui donne la matrice solide 3.

Lorsqu'elle est en contact avec la matière II, la matière I doit rester solide, mais elle peut être par exemple une résine durcie avant la réalisation de l'ensemble 100.

Lorsque les matières I et/ou II ne sont pas thermoplastiques, leur composition chimique peut varier entre le moment où on réalise l'enduction des gaines 1 et/ou 2 et le moment où ces gaines sont solides. De toute façon, lors de la réalisation de l'ensemble 100, la température à laquelle se trouve la matière II, lorsqu'elle est à l'état liquide ou pâteux, doit être telle que les matières du fil 10 et de la gaine 1 restent solides et ne subissent aucune dégradation notable, la matière II pouvant donc se solidifier à une température à laquelle la matière I et le fil 10 restent solides.

Il est préférable d'utiliser deux matières thermoplastiques I et II comme précédemment décrit car la mise en œuvre est très simple et permet des cadences de fabrication rapides pour la réalisation de l'ensemble 100.

Les matières I et/ou II peuvent comporter chacune plusieurs matériaux organiques, par exemple un mélange de polymères, et elles peuvent comporter des matériaux non organiques, par exemple des charges, des adjuvants divers.

Il est possible d'autre part de choisir les modules des fils 10 et des matières I, II pour permettre une bonne répartition des contraintes dans l'ensemble 100 lors de son emploi.

D'autre part, pour permettre une bonne répartition des contraintes dans l'ensemble 100, il est nécessaire que la matière I adhère aux fils 10 et à la matrice 3.

La figure 3 représente en coupe radiale un article utilisant deux ensembles conformes à l'invention, cet article étant une enveloppe de pneumatique. Cette enveloppe de pneumatique 5 comporte un sommet 6, deux flancs 7 et deux bourrelets 8. Chaque bourrelet 8 est renforcé avec une tringle 9 qui est constituée par l'ensemble 100 conforme à l'invention et représenté à la figure 2. A la figure 3, pour la simplification du dessin, chaque fil 10 avec sa gaine 1 est représenté par un point. Une carcasse 11 joint les tringles 9 en s'enroulant autour de ces tringles, de façon connue en soi. L'enveloppe 5 est montée sur la jante 12.

De préférence, dans chaque tringle 9, le rapport entre d'une part le module d'extension de chaque fil 10 et d'autre part le module de compression de la matière I est au moins égal à 1 et au plus égal à 300, et les matières I et II ont de préférence pratiquement le même module de compression, dans chaque tringle 9.

Exemple 1

A titre d'exemple, chaque tringle 9 a les caractéristiques suivantes :
— fils 10 : fils en acier, ces fils ayant chacun un module d'extension de 20 000 daN/mm$^2$ ; diamètre de chaque fil : 1 mm ; nombre de fils dans la tringle : 16, la tringle ayant une section carrée avec quatre couches de quatre fils chacune (figure 2) ;
— gaine 1 : épaisseur « e » : 0,5 mm ; matière I : polyamide 66 ; température de fusion de la matière I : 255 °C ; module de compression de la matière I : 320 daN/mm$^2$ ; on préchauffe les fils 10 avant réalisation de la gaine 1 de façon connue en soi pour provoquer une bonne adhésion entre les fils 10 et la matière I ;
— gaine 2 initiale, avant réalisation de la matrice 3 : épaisseur « a » à l'état solide : 0,13 mm ; matière II : polyamide 6 ; température de fusion de la matière II : 220 °C ; module de compression de la matière II : 290 daN/mm$^2$ ;
— distance entre fils 10 voisins : 1 mm (2e) dans chaque couche et d'une couche à l'autre ;
— les matières I et II ont une bonne adhésion entre elles étant donné que ce sont deux polyamides.

Les valeurs géométriques et les modules donnés précédemment pour les tringles 9 sont déterminés à 20 °C.

La réalisation des gaines 1 et 2 autour des fils 10 est effectuée par double extrusion comme décrit précédemment.

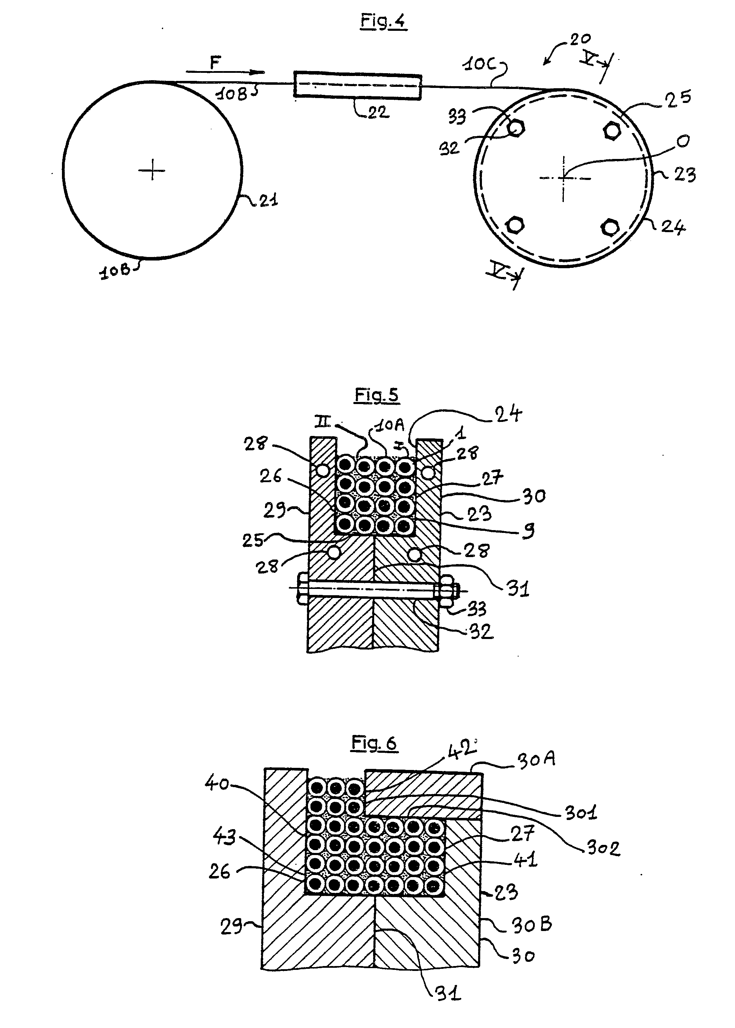

La réalisation de chaque tringle 9 s'effectue selon un procédé qui utilise le dispositif 20 représenté à la figure 4. Ce dispositif 20 comporte une bobine 21, un tunnel chauffant 22 et un tambour 23. Sur la bobine 21 est enroulé le fil gainé 10B comportant les gaines 1 et 2 solides. On déroule ce fil gainé 10B dans le sens de la flèche F pour lui faire traverser le tunnel 22 et l'enrouler sur le tambour 23. Comme précédemment décrit, le tunnel chauffant permet la fusion de la matière II tandis que la matière I reste solide, de façon à obtenir le fil gainé 10C que l'on enroule ensuite sur le tambour 23.

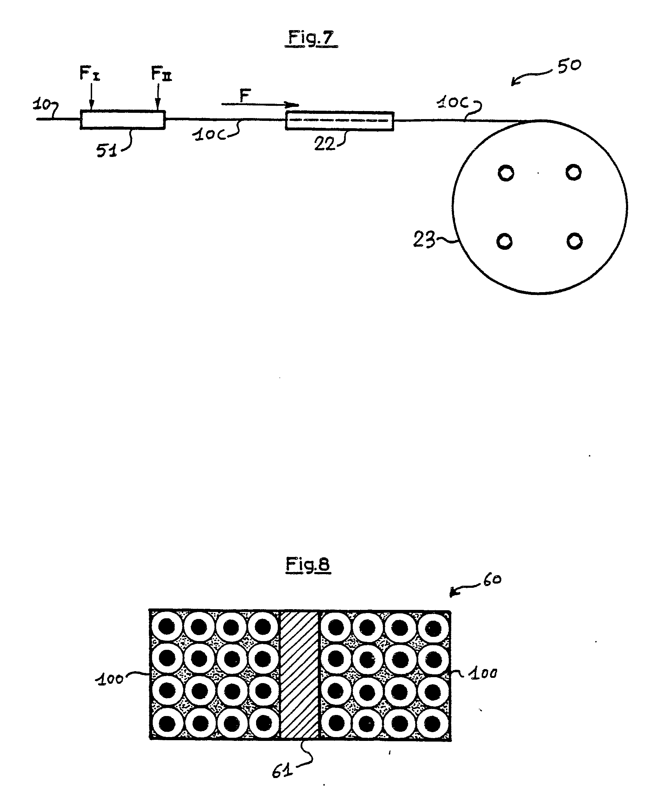

La figure 5 représente une portion de la section du tambour 23 par un plan passant par l'axe de rotation du tambour 23, cet axe étant schématisé par la lettre O à la figure 4, la coupe de la figure 5 étant schématisée par la ligne droite V-V à la figure 4. La gorge 24 a une orientation longitudinale sur le tambour 23 et sa section à la figure 5 a une forme rectangulaire, cette gorge comportant un fond cylindrique 25, et deux parois latérales 26, 27. Le cylindre 25 a le même axe de rotation O que le tambour 23 et les parois latérales 26, 27 sont des couronnes cylindriques d'axe de rotation O et de forme plane, les plans de ces couronnes 26, 27 étant perpendiculaires à l'axe O. L'enroulement du fil gainé 10C s'effectue dans la gorge 24 selon quatre couches superposées de quatre spires chacune. La pression exercée sur l'ensemble de ces spires, pendant l'enroulement, grâce aux parois 25, 26, 27 permet le remplissage des vides, entre les fils gainés 10A, par la matière II liquide, la matière I des gaines 1 restant solide, la gorge 24 servant de moule grâce à ses parois 25, 26, 27. Les résistances chauffantes 28 permettent de maintenir la matière II à une température supérieure à la température de fusion de la matière II et inférieure à la température de fusion de la matière I. A titre d'exemple, la température de la matière II dans le tunnel 22 et dans la gorge 24 est d'environ 245 °C. Lorsque seize spires ont été groupées par enroulement dans la gorge 24, on coupe le fil gainé 10C, et on laisse refroidir le tambour 23 pour provoquer la solidification de la matière II et obtenir ainsi la tringle 9.

Le tambour 23 est constitué par deux parties 29, 30 dont le plan de jonction 31, perpendiculaire à l'axe O aboutit à la face cylindrique 25. Ces parties sont réunies par des vis 32 qui traversent ces parties, le serrage se faisant avec les écrous 33 disposés aux extrémités des vis 32. Lorsque la matière II est solidifiée, on démonte le tambour 23 en dévissant les écrous 33 et en enlevant les vis 32, ce qui permet de séparer les parties 29, 30 et d'enlever la tringle 9 de la gorge 24. On peut ensuite remonter le tambour 23 en assemblant les parties 29, 30 pour une autre fabrication de tringle 9.

Exemple 2

L'exemple qui suit permet de comparer deux séries d'enveloppes de pneumatiques. La première série comporte six enveloppes dont les tringles ne sont pas conformes à l'invention et la deuxième série comporte six enveloppes dont les tringles sont conformes à l'invention, chaque enveloppe comportant deux tringles.

Toutes les enveloppes sont des enveloppes radiales de dimensions 175 × 14, les enveloppes du premier groupe ne différent des enveloppes du deuxième groupe que par les tringles.

Chaque tringle non conforme à l'invention est réalisée en utilisant un fil d'acier de diamètre 1 mm, ce fil étant entouré par une gaine unique de polyamide 6, l'épaisseur de cette gaine à l'état solide étant de 0,1 mm. On utilise ce fil dans le dispositif 20 précédemment décrit de façon à faire fondre la gaine et à enrouler 18 spires du fil dans la gorge 24. Le polyamide 6 fondu forme alors une matrice dans laquelle se trouvent disposées les 18 spires du fil d'acier qui ne comporte alors aucune gaine individuelle, l'ensemble de la matrice et des spires constituant une tringle.

Chaque tringle conforme à l'invention est réalisée en utilisant le fil gainé 10B précédemment décrit, avec les caractéristiques suivantes :
— fil 10 : identique au fil d'acier utilisé pour faire les tringles non conformes à l'invention ;
— gaine 1 : épaisseur « e » : 0,025 mm ; matière I : polyamide 66 ;
— gaine 2 : épaisseur « a » : 0,075 mm ; matière II : polyamide 6 identique au polyamide 6 utilisé pour les tringles non conformes à l'invention.

Les épaisseurs « e », « a » sont déterminées pour des gaines 1, 2 solides.

Les matières I, II ont les mêmes caractéristiques que précédemment décrit à l'exemple 1, c'est-à-dire :
— Matière I (polyamide 66) : température de fusion : 255 °C ; module de compression : 320 daN/mm² ;
— Matière II (polyamide 6) : température de fusion : 220 °C ; module de compression : 290 daN/mm².

Les valeurs géométriques et les modules donnés précédemment pour ces tringles sont déterminés à 20 °C. Chaque tringle conforme à l'invention est réalisée comme précédemment décrit, selon le procédé conforme à l'invention, dans le dispositif 20, en enroulant 18 spires, comme pour les tringles non conformes à l'invention.

Toutes les tringles ont les mêmes dimensions géométriques extérieures, et elles comportent chacune un empilement de cinq couches de fils, les couches d'ordre un, trois, cinq comportant chacune quatre spires et les couches d'ordre deux, quatre comportant chacune trois spires, l'ordre des couches correspondant à l'ordre de l'empilage.

On soumet chaque enveloppe au même test qui consiste à monter l'enveloppe sur sa jante et à gonfler l'enveloppe avec de l'eau sous pression, jusqu'à ce que l'enveloppe éclate par rupture d'au moins une tringle, en notant la pression de l'eau causant cet éclatement. On constate que les enveloppes de la première série comportant des tringles non conformes à l'invention éclatent pour une pression d'eau moyenne de 15,3 bars alors que les enveloppes de la deuxième série comportant des tringles conformes à l'invention éclatent pour une pression d'eau moyenne de 16,1 bars, la pression d'eau moyenne, dans chaque série, étant la moyenne arithmétique des pressions d'eau correspondant à l'éclatement.

Les tringles conformes à l'invention permettent donc un gain de 5 % sur la résistance. On peut alors par exemple diminuer le nombre de spires dans les tringles conformes à l'invention pour avoir la même résistance que les tringles connues. Cette diminution dans l'exemple choisi correspond à une spire par tringle, soit une longueur de 1,2 m. Cette diminution se traduit par une baisse de poids, une économie de matière et d'énergie lors de la réalisation, donc à un coût moindre. A ces avantages s'ajoutent, pour les enveloppes avec tringles conformes à l'invention, les avantages suivants lors du roulage : une performance homogène, par suite de la forme régulière des tringles avec un espace constant entre les fils, et une absence d'usure des fils, puisqu'ils ne sont pas directement au contact, c'est-à-dire une augmentation de la durée de vie.

Il va de soi qu'on pourrait enrouler simultanément plusieurs spires de fils gainés 10C dans la gorge 24 par exemple en utilisant en même temps plusieurs bobines 21. Le procédé précédemment décrit pour la réalisation de la tringle 9 est simple, rapide, et il a de plus l'avantage de permettre une grande variété de formes de tringle en faisant varier la forme de la gorge· où s'enroulent les spires du fil gainé 10C.

La figure 6 représente par exemple une autre gorge 40 du tambour 23, la figure 6 étant une section effectuée de façon analogue à la figure 5. La forme complexe de cette gorge 40 est dépourvue de plan de symétrie et comporte une poche 41 et un col 42. L'enroulement de spires de fil gainé 10C dans cette gorge 40 permet d'obtenir une tringle 43 dont la forme complexe peut se justifier par une répartition complexe des contraintes à l'intérieur de l'enveloppe de pneumatique où se trouve cette tringle.

A titre d'exemple le col 42 se trouve entièrement d'un côté du plan 31, dans la partie 29 du tambour 23, et la partie 30 de ce tambour 23 comporte deux portions démontables 30A, 30B.

La portion 30A radialement extérieure par rapport à l'axe O du tambour 23 comporte une paroi plane 301 parallèle à la paroi 26 de la partie 29, cette paroi 301 limitant le col 42, et une paroi 302 qui est un cylindre de révolution d'axe O, cette paroi 302 limitant la poche 41 et étant en contact avec la portion radialement intérieure 30B dont la paroi 27 limite latéralement la poche 41. On commence par enlever la portion 30A pour enrouler les spires de fil 10C correspondant à la poche 41, on remet ensuite la portion 30A contre la portion 30B pour enrouler un nombre réduit de spires de fil 10C pour réaliser le col 42.

La figure 7 représente un autre dispositif pour la mise en œuvre du procédé conforme à l'invention. Ce dispositif 50 se distingue du dispositif 20 précédemment décrit par le fait qu'on opère en continu le double gainage du fil 10 avec les matières I, II et la réalisation de chaque tringle 9. Le fil 10 est introduit dans la tête d'extrusion 51 où on fait arriver d'abord la matière I, cette arrivée étant schématisée par la flèche $F_I$ puis la matière II, cette arrivée étant schématisée par la flèche $F_{II}$. Le fil gainé sortant de la tête d'extrusion 51 est tel que la matière II est à l'état liquide ou pâteux et la matière I à l'état solide, c'est-à-dire que c'est le fil gainé 10C. Ce fil gainé 10C défile, dans le sens de la flèche F, dans le tunnel 22, pour maintenir la matière II à l'état liquide ou pâteux, puis le fil gainé 10C est enroulé sur le tambour 23 comme précédemment décrit. Il va de soi que le tambour 23 pourrait être disposé directement à la sortie de la tête d'extrusion 51, le dispositif 50 étant alors dépourvu de tunnel 22. Le gainage en continu pourrait aussi n'être opéré que partiellement par exemple en partant de fils 10A et en réalisant en continu le gainage de ces fils 10A avec la matière II et la formation de la tringle 9.

Chaque tringle 9 peut comporter si on le désire d'autres matériaux que les fils 10 et les matières I, II. C'est ainsi par exemple que cette tringle 9 peut être constituée par l'ensemble 100 et par un manchon de caoutchouc disposé autour de cet ensemble, la vulcanisation de ce manchon s'effectuant notamment lorsque la tringle est disposée dans l'enveloppe 5 pour faciliter l'adhésion entre la tringle et la partie de l'enveloppe avec laquelle la tringle est en contact.

L'invention couvre les cas où l'on réalise plusieurs ensembles que l'on relie ensuite pour former un ensemble complexe. La figure 8 représente par exemple en coupe un ensemble complexe 60 constitué par deux ensembles 100 précédemment décrits que l'on a réunis par une matière 61. Cette matière 61 peut être identique à la matière II ou non. Un tel ensemble complexe pourrait être réalisé aussi en accolant directement deux ensembles 100 dont on a chauffé les surfaces de contact pour faire fondre la matière II.

L'invention couvre les cas où les ensembles conformes à l'invention forment des câbles de renfort ou des nappes de renfort.

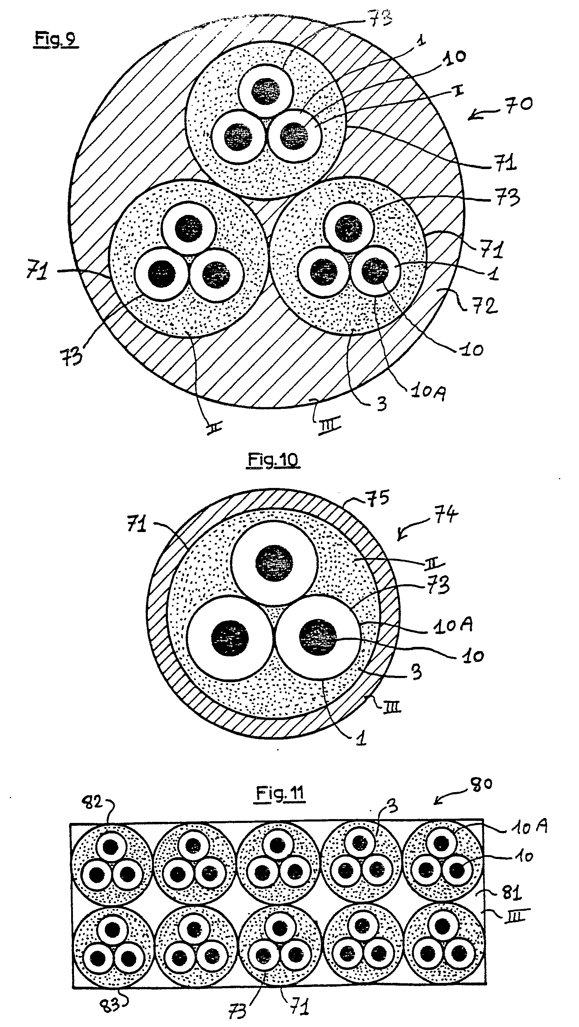

La figure 9 représente par exemple en coupe un câble 70 conforme à l'invention et constitué par un ensemble complexe comportant trois torons gainés 71 disposés dans une matrice solide 72 organique, chacun de ces torons gainés 71 étant un ensemble conforme à l'invention. Chaque toron gainé 71 est constitué d'une part par un toron 73, lui-même formé par trois fils gainés 10A, et d'autre part par une matrice 3 solide dans laquelle est disposé le toron 73. Chaque fil gainé 10A est constitué, comme précédemment décrit, par un fil 10 entouré par une gaine 1 solide en matière I.

Chaque toron gainé 71 est réalisé selon le procédé conforme à l'invention par exemple de la façon suivante. On réalise tout d'abord trois fils gainés 10C constitués chacun, comme précédemment décrit, par un fil gainé 10A entouré par une gaine 2 en matière organique II liquide ou pâteuse. On tord ensuite ensemble ces trois fils gainés 10C pour obtenir un toron 73, la matière II étant encore à l'état liquide ou pâteux, ce qui lui permet de remplir tous les vides entre les fils gainés 10A et d'entourer ces fils gainés 10A, les gaines 1 restant solides. On provoque ensuite la solidification de la matière II pour obtenir la matrice 3 qui enrobe le toron 73 dont les fils gainés 10A sont au contact les uns des autres, la matrice 3 remplissant tous les espaces entre ces fils gainés 10A.

Pendant toutes les opérations précédemment décrites où les matières I et II sont en contact entre elles, la matière II est toujours à une température telle que les fils 10 et la matière I soient solides et ne subissent pratiquement aucune dégradation.

On réalise ensuite trois ensembles 74 en entourant individuellement chaque toron gainé 71 avec une autre gaine 75 de matière III organique à l'état liquide ou pâteux. Un tel toron à double gainage 74 est représenté en coupe à la figure 10. On tord ensuite ensemble pour les grouper trois ensembles 74, la matière III étant toujours à l'état liquide ou pâteux pour permettre la migration de la matière III dans tous les vides entre les torons gainés 71. On provoque ensuite la solidification de la matière III pour obtenir la matrice 72 solide qui enrobe les torons gainés 71 et remplit tous les espaces entre ces torons gainés qui sont au contact les uns avec les autres.

Pendant toutes les opérations précédemment décrites où chaque matrice 3 et la matière III sont au contact l'une de l'autre, la matière III est toujours à une température telle que la matière I des gaines 1 et la matière II des matrices 3 restent solides et ne subissent pratiquement aucune dégradation. On obtient ainsi le câble 70 constitué par les trois torons gainés 71 et la matrice 72. Ce câble 70 est tel que les fils de renfort 10 conservent une position fixe les uns par rapport aux autres dans chaque toron 73, grâce aux gaines 1 et à la matrice 3, et que les torons 73 conservent une position fixe les uns par rapport aux autres grâce aux matrices 3, 72, sans qu'il y ait de contact direct entre les fils 10, grâce aux gaines 1, et sans qu'il y ait de vide entre les fils 10 ou entre les torons 73. Le câble 70 permet donc des performances homogènes, sans usure des fils 10 par contact direct entre eux, et sans corrosion de ces fils 10 s'ils sont métalliques. La matière III adhère à la matière II et la matière I adhère aux fils 10 et à la matière II.

Ce câble 70 peut servir par exemple à renforcer un tuyau, une courroie, une bande transporteuse, une enveloppe de pneumatique.

La matière III peut être par exemple une matière thermoplastique, une matière vulcanisable ou durcissable, cette manière III pouvant se solidifier à une température à laquelle les matières I et II restent solides.

Si les matières I, II, III sont toutes des matières thermoplastiques, on a alors la relation :

$$T_{FI} > T_{FII} > T_{FIII}$$

$T_{FI}$ représentant la température de fusion de la matière I, $T_{FII}$ représentant la température de fusion de la matière II et $T_{FIII}$ représentant la température de fusion de la matière III. On peut envisager des étapes ultérieures faisant appel à d'autres matrices en matières organiques, par exemple pour réaliser des câbles groupant chacun plusieurs câbles 70. La mise en oeuvre et la solidification de chacune de ces matières est alors effectuée à des températures telles que les matières organiques des étapes précédentes restent solides et ne subissent pratiquement pas de dégradation, chacune de ces matières organiques adhérant à la ou aux autres matières organiques avec lesquelles elle est au contact.

La figure 11 représente en coupe une nappe de renfort conforme à l'invention. Cette nappe 80 est un ensemble complexe constitué par des torons gainés 71 précédemment décrits disposés dans une matrice organique 81 solide. Cette nappe 80 est par exemple obtenue de façon analogue au câble 70 précédemment décrit avec la différence que les ensembles 74, constitués par des torons gainés 71 entourés de leur gaine supplémentaire 75 de matière III, sont disposés de façon à se trouver placés sur deux couches superposées 82, 83 sans que les torons gainés 71 soient tordus ensemble. Dans chaque couche 82, 83 de la nappe 80, tous les axes des torons 73 sont parallèles entre eux et ont une orientation différente de celle des axes des torons 73 de l'autre couche 83, 82, c'est-à-dire que ces couches sont croisées, les torons gainés 71 étant en contact entre eux, par leurs gaines 3, dans chaque couche 82, 83 et d'une de ces couches à l'autre. Pour la clarté du dessin, les axes des torons 73 ne sont pas représentés à la figure 11.

La nappe 80 est utilisée par exemple comme nappe de renfort du sommet 6 de l'enveloppe 5, représentée à la figure 3, les torons gainés 71 étant représentés par des cercles sur cette figure. La matière III est par exemple un caoutchouc non vulcanisé dont on provoque la vulcanisation, au sein de l'enveloppe 5, pour obtenir la matrice 81. Les avantages de la nappe 80 sont analogues à ceux précédemment décrits pour le câble 70, c'est-à-dire notamment que les fils 10 restent séparés les uns des autres, à une distance fixe, dans chaque toron 73, sans risque d'usure par frottement et sans risque de corrosion, lorsque les fils 10 sont métalliques, avec des performances homogènes pour tous ces torons 73.

Dans le procédé conforme à l'invention, il est nécessaire que chaque fil 10 soit recouvert individuellement par une gaine de matière organique I de façon à obtenir un fil gainé 10A, pour garantir une distance minimum donnée entre les fils 10 voisins, mais les matrices dans lesquelles sont disposés ces fils gainés 10A peuvent être réalisées en gainant simultanément ensemble plusieurs fils gainés 10A ou plusieurs ensembles de fils gainés 10A. C'est ainsi par exemple que la matrice 3 des ensembles 100, 71 peut être réalisée en entourant plusieurs fils gainés 10A, ou la totalité des fils gainés 10A de chacun de ces ensembles, avec une même gaine commune de matière II.

Il est cependant préférable de gainer individuellement, avec la matière formant matrice, chaque fil gainé 10A ou chaque ensemble conforme à l'invention de ces fils gainés, comme décrit dans les exemples, ou au moins une partie de ces fils ou de ces ensembles, pour permettre chaque fois une bonne migration de la matière de ces gaines dans tous les vides, et ceci particulièrement parce que les fils gainés 10A ou les ensembles de ces fils gainés, se touchent, car les vides entre les fils gainés ou entre ces ensembles se présentent alors sous forme de canaux difficilement accessibles à la matière formant la matrice.

Il faut noter d'autre part que les fils gainés de matières I et II peuvent être facilement stockés par exemple sur des bobines, ces gaines étant alors notamment solides. Il suffit ensuite de provoquer le groupage de ces fils, la matière II étant à l'état liquide ou pâteux pour permettre la réalisation d'un ensemble conforme à l'invention. De même, il est possible de stocker un ensemble conforme à l'invention, par exemple l'ensemble 74 avec une gaine 75 solide, et de réaliser un ensemble complexe, par exemple le câble 70, en groupant ces ensembles 74, la gaine III étant à l'état liquide ou pâteux.

Le passage à l'état liquide ou pâteux de la matière II, par exemple sa fusion, peut être provoquée après groupage des fils gainés, notamment en chauffant un faisceau de fils gainés de matière I et II solides, ce chauffage étant effectué par exemple à l'aide des fils de renfort eux-mêmes, notamment en y faisant passer un courant électrique, mais il est préférable que la matière II soit à l'état liquide ou pâteux avant que l'on groupe les fils gainés de matières I et II, pour des raisons d'économie d'énergie, de cadence de fabrication et pour faciliter la migration de la matière II.

Le gainage des fils de renfort avec les matières I et II peut être effectué par des procédés autres que l'extrusion, par exemple par des procédés à la trempée, ou par projection.

Il faut noter aussi que les fils de renfort peuvent subir des traitements avant d'être recouverts avec la gaine de matière I, par exemple un traitement d'ensimage pour améliorer l'adhésion entre le fil et cette matière.

Les remarques précédentes relatives au gainage et à la réalisation de la matrice des ensembles conformes à l'invention s'appliquent aux ensembles complexes conformes à l'invention.

**Revendications**

1. Procédé permettant d'obtenir un ensemble (100, 71) destiné à renforcer un article (5), cet ensemble (100, 71) comportant des fils (10) de renfort et une matrice (3) dans laquelle sont disposés ces fils (10), ce procédé comportant les points suivants :

a) on groupe des fils (10) de renfort entourés individuellement par une gaine (1) de matière organique I ;

b) on provoque la migration d'une matière organique II dans les vides entre les fils (10) gainés de matière I de façon à remplir ces vides avec la matière II qui se trouve alors à l'état liquide ou pâteux ;

c) on provoque la solidification de la matière II qui constitue ainsi la matrice (3) dans laquelle sont disposés les fils (10) gainés de matière I ;

d) pendant la migration et la solidification de cette matière II, les fils (10) et leurs gaines (1) de matière I restent solides ;

e) la matière I adhère aux fils (10) qu'elle entoure et à la matrice (3) avec laquelle elle est en contact ;

ce procédé étant caractérisé par les points suivants :

f) pour au moins une partie des fils (10) de renfort, on réalise une gaine (2) de matière II individuellement sur chacun des fils (10) gainés de matière I ;

g) on groupe ensuite ces fils (10) gainés individuellement de matière I et II pour provoquer la migration de la matière II dans les vides entre les fils (10) gainés de matière I ;

h) les fils (10) gainés de matière I sont groupés de telle sorte que les gaines (1) de matière I de deux fils (10) de renfort voisins soient au contact l'une de l'autre à la fin de la migration de la matière II.

2. Procédé selon la revendication 1 caractérisé en ce que la matière II se trouve à l'état liquide ou pâteux au moment où on groupe les fils (10) de renfort.

3. Procédé selon l'une quelconque des renvendications 1 ou 2, caractérisé en ce que le groupement des fils (10) de renfort est effectué au moins en partie en enroulant des spires d'un fil (10).

4. Procédé selon la revendication 3, caractérisé en ce que les spires sont enroulées dans une gorge (24) d'un tambour (23).

5. Procédé selon l'une quelconque des revendications 1 à 4, caractérisé en ce qu'au moins une des matières I, II est une matière thermoplastique.

6. Procédé selon la revendication 5, caractérisé en ce que les matières I et II sont des matières thermoplastiques telles que la température de fusion de la matière I soit supérieure à la température de fusion de la matière II, la température de la matière II, lors de la migration de cette matière II étant supérieure à la température de fusion de cette matière II et inférieure à la température de fusion de la matière I.

7. Procédé selon la revendication 6, caractérisé en ce que les matières I et II sont constituées au moins en partie par des polyamides.

8. Procédé selon la revendication 7, tel que la matière I est constituée au moins en partie par un polyamide 66 et la matière II est constituée au moins en partie par un polyamide 6.

9. Procédé selon l'une quelconque des revendications 1 à 8, caractérisé en ce que le rapport entre d'une part le module d'extension de chaque fil (10) de renfort et d'autre part le module de compression de la matière I est au moins égal à 1 et au plus égal à 300, ces modules étant déterminés à 20 °C.

10. Procédé selon l'une quelconque des revendications 1 à 9, caractérisé en ce que les matières I et II ont pratiquement le même module de compression, déterminé à 20 °C.

11. Procédé selon l'une quelconque des revendications 1 à 10, caractérisé en ce qu'on opère en continu le gainage au moins partiel des fils (10) et leur groupement.

12. Procédé permettant d'obtenir un ensemble complexe (60, 70, 80) destiné à renforcer un article (5) caractérisé en ce qu'on relie au moins deux ensembles (100, 71) obtenus selon le procédé conforme à l'une quelconque des revendications 1 à 11.

13. Procédé selon la revendication 12, caractérisé en ce qu'on entoure les ensembles (71) avec une autre gaine (75) en matière organique III, en ce qu'on provoque la migration de la matière III dans les vides entre ces ensembles (71) de façon à remplir ces vides avec la matière III qui se trouve alors à l'état liquide ou pâteux, et en ce qu'on provoque la solidification de la matière III qui constitue ainsi une matrice (72, 81) dans laquelle sont disposés les ensembles (71), les gaines (1) de matière I, les matrices (3) de matière II et les fils (10) de renfort de ces ensembles (71) restant solides pendant ces opérations.

14. Procédé selon la revendication 13, caractérisé en ce que, pour au moins une partie des ensembles (71), la gaine (75) de matière III est réalisée individuellement sur chacun de ces ensembles (71) et en ce qu'on groupe ces ensembles (71) gainés individuellement de matière III pour provoquer la migration de la matière III à l'état liquide ou pâteux dans les vides entre les ensembles (71).

15. Ensemble (100, 71) destiné à renforcer un article (5), cet ensemble (100, 71) qui comporte des fils (10) de renfort et une matrice (3) dans laquelle sont disposés ces fils (10), l'ensemble comportant les points suivants :

a) chacun de ces fils (10) est recouvert individuellement par une gaine solide (1) de matière organique I ;

b) ces fils (10) ainsi gainés de matière I sont disposés dans la matrice solide (3) ;

c) la matrice (3) est une matière organique obtenue à partir d'une matière organique II liquide ou pâteuse ;

d) la matrice (3) remplit les espaces entre les fils (10) gainés de matière I ;

e) la matière I adhère aux fils (10) qu'elle entoure et à la matrice (3) avec laquelle elle est en contact ;

cet ensemble étant caractérisé par les points suivants :

f) les matières I et II sont des matières thermoplastiques, la température de fusion de la matière I étant supérieure à la température de fusion de la matière II, la matière II pouvant se solidifier à une température à laquelle les gaines (1) de matière I et les fils (10) de renfort restent solides ;

g) les fils (10) sont groupés de telle sorte que les gaines (1) de matière I de deux fils (10) de renfort voisins soient au contact l'une de l'autre.

16. Ensemble (100, 71) selon la revendication 15, caractérisé en ce que les matières I et II sont constituées au moins en partie par des polyamides.

17. Ensemble (100, 71) selon la revendication 16, caractérisé en ce que la matière I est constituée au moins en partie par un polyamide 6.

18. Ensemble (100, 71) selon l'une quelconque des revendications 15 à 17, caractérisé en ce que le rapport entre d'une part le module d'extension de chaque fil (10) de renfort et d'autre part le module de compression de la matière I est au moins égal à 1 et au plus égal à 300, ces modules étant déterminés à 20 °C.

19. Ensemble (100, 71) selon l'une quelconque des revendications 15 à 18, caractérisé en ce que les matières I et II ont pratiquement le même module de compression, déterminé à 20 °C.

20. Ensemble complexe (60, 70, 80) destiné à renforcer un article (5), caractérisé en ce qu'il comporte au moins deux ensembles (100, 71) reliés, ces ensembles (100, 71) étant conformes à l'une quelconque des revendications 15 à 19. .

21. Ensemble complexe (70, 80) conforme à la revendication 20, caractérisé en ce que les ensembles (71) qu'il comporte sont disposés dans une matrice (72, 81) en matière organique qui remplit les espaces entre ces ensembles (71), cette matière organique étant obtenue à partir d'une matière organique III qui peut se solidifier à une température à laquelle les gaines (1) de matière I, les matrices (3) de matière II et les fils (10) de renfort de ces ensembles (71) restent solides.

22. Ensemble (100, 71) ou ensemble complexe (60, 70, 80) conforme à l'une quelconque des revendications 15 à 21, caractérisé en ce qu'il est destiné à renforcer un article (5) en matière(s) plastique(s) ou en caoutchouc(s).

23. Ensemble (100, 71) ou ensemble complexe (60, 70, 80) selon la revendication 22, caractérisé en ce qu'il est soit une tringle, soit un câble, soit une nappe.

24. Article (5) renforcé par un ensemble (100, 71) et/ou par un ensemble complexe (60, 70, 80) conformes à l'une quelconque des revendications 15 à 23.

25. Article (5) selon la revendication 24, caractérisé en ce qu'il est une enveloppe de pneumatique.

**Claims**

1. Method of obtaining an assembly (100,71) intended to reinforce an article (5), this assembly (100,71) comprising reinforcement threads (10) and a matrix (3) in which these threads (10) are arranged, this method comprising the following points :

(a) reinforcement threads (10) surrounded individually by a sheathing (1) of organic material (I) are grouped together ;

(b) an organic material II is caused to migrate into the voids between the threads (10) sheathed with material I so as to fill these voids with the material II which is then in liquid or pasty state ;

(c) the material II is caused to solidify, thus constituting the matrix (3) in which the threads (10) sheathed with material I are arranged ;

(d) during the migration and the solidification of this material II, the threads (10) and their sheathings (1) of material I remain solid ;

(e) material I adheres to the threads (10) which it surrounds and to the matrix (3) with which it is in contact ; this process being characterized by the following points :

(f) for at least a part of the reinforcement threads (10) a sheathing (2) of material II is produced individually on each of the threads (10) sheathed with material I ;

(g) these threads (10), sheathed individually with materials I and II are then grouped to cause the migration of the material II into the voids between the threads (10) sheathed with material I ;

(h) the threads (10) sheathed with material I are grouped in such a manner that the sheathings (1) of material I of two adjacent reinforcement threads (10) are in contact with each other at the end of the migration of the material II.

2. Method according to Claim 1, characterized in that the material II is in liquid or pasty state at the time that the reinforcement threads (10) are grouped together.

3. Method according to any one of Claims 1 or 2, characterized in that the grouping of the reinforcement threads (10) is effected at least in part by winding turns of a thread (10).

4. Method according to Claim 3, characterized in that the turns are wound in a groove (24) of a drum (23).

5. Method according to any one of Claims 1 to 4, characterized in that at least one of the materials I, II is a thermoplastic material.

6. Method according to Claim 5, characterized in that materials I and II are thermoplastic materials such that the melting point of material I is higher than the melting point of material II, the temperature of material II upon the migration of this material II being greater than the melting point of this material II and less than the melting point of material I.

7. Method according to Claim 6, characterized in that the materials I and II are formed at least in part of polyamides.

8. Method according to Claim 7, such that material I is formed at least in part of a polyamide 66 and material II is formed at least in part of polyamide 6.

9. Method according to any one of Claims 1 to 8, characterized in that the ratio between on the one hand the extension modulus of each reinforcement thread (10) and on the other hand the compression modulus of material I is at least equal to 1 and at most equal to 300, these moduli being determined at 20 °C.

10. Method according to any one of Claims 1 to 9, characterized in that the materials I and II have substantially the same compression modulus, determined at 20 °C.

11. Method according to any one of Claims 1 to 10, characterized in that the at least partial sheathing of the threads (10) and their grouping together are effected continuously.

12. Method of obtaining a complex assembly (60,70,80) intended to reinforce an article (5), characterized in that at least two assemblies (100,71) obtained by the method according to any one of Claims 1 to 11 are connected together.

13. Method according to Claim 12, characterized in that the assemblies (71) are surrounded by another sheathing (75) of organic material III, in that the material III is caused to migrate into the voids between these assemblies (71) so as to fill these voids with the material III which is then in liquid or pasty state, and in that the material III is caused to solidify, thus constituting a matrix (72,81) in which the assemblies (71) are arranged, the sheathings (1) of material I, the matrices (3) of material II and the reinforcement threads (10) of these assemblies (71) remaining solid during these operations.

14. Method according to Claim 13, characterized in that, in the case of at least part of the assemblies (71), the sheathing (75) of material III is produced individually on each of these assemblies (71) and in that these assemblies (71) individually sheathed with material III are grouped together to cause the migration of the material III in liquid or pasty state into the voids between the assemblies (71).

15. Assembly (100,71) intended to reinforce an article (5), this assembly (100,71) which comprises reinforcement threads (10) and a matrix (3) in which these threads (10) are arranged, the assembly comprising the following points :

(a) each of these threads (10) is covered individually with a solid sheathing (1) of organic material I ;

(b) these threads (10) thus sheathed with material I are arranged in the solid matrix (3) ;

(c) the matrix (3) is an organic material obtained from a liquid or pasty organic material II ;

(d) the matrix (3) fills the spaces between the threads (10) sheathed with material I ;

(e) the material I adheres to the threads (10) which it surrounds and to the matrix (3) with which it is in contact ; this assembly being characterized by the following points :

(f) the materials I and II are thermoplastic materials, the melting point of material I being higher than the melting point of material II, the material II being able to solidify at a temperature at which the sheathings (1) of material I and the reinforcement threads (10) remain solid ;

(g) the threads (10) are grouped such that the sheathings (1) of material I of two adjacent reinforcement threads (10) are in contact with each other.

16. Assembly (100,71) according to Claim 15, characterized in that the materials I and II are formed at least in part of polyamides.

17. Assembly (100,71) according to Claim 16, characterized in that the material I is formed at least in part of a polyamide 66 and the material II is formed at least in part of a polyamide 6.

18. Assembly (100,71) according to any one of Claims 15 to 17, characterized in that the ratio between on the one hand the extension modulus of each reinforcement thread (10) and on the other hand the compression modulus of the material I is at least equal to 1 and at most equal to 300, these moduli being determined at 20 °C.

19. Assembly (100,71) according to any one of Claims 15 to 18, characterized in that the materials I and II have substantially the same compression modulus, determined at 20 °C.

20. Complex assembly (60,70,80) intended to reinforce an article (5), characterized in that it comprises at least two assemblies (100,71) connected together, these assemblies (100,71) being in accordance with any one of Claims 15 to 19.

21. Complex assembly (70,80) according to Claim 20, characterized in that the assemblies (71) which it comprises are arranged in a matrix (72,81) of organic material which fills the spaces between these assemblies (71), this organic material being obtained from an organic material III which can solidify at a temperature at which the sheathings (1) of material I, the matrices (3) of material II and the reinforcement threads (10) of these assemblies (71) remain solid.

22. Assembly (100,71) or complex assembly (60,70,80) according to any one of Claims 15 to 21, characterized in that it is intended for the reinforcement of an article (5) of plastic material or materials or of rubber material or materials.

23. Assembly (100,71) or complex assembly (60,70,80) according to Claim 22, characterized in that it is a bead ring, a cable or a ply.

24. Article (5) reinforced by an assembly (100,71) and/or by a complex assembly (60,70,80) according to any one of Claims 15 to 23.

25. Article (5) according to Claim 24, characterized in that it is a pneumatic tyre.

**Patentansprüche**

1. Verfahren, das es erlaubt, ein Ensemble (100, 71) zu erhalten, welches dazu bestimmt ist, einen Gegenstand (5) zu verstärken, wobei dieses Ensemble (100, 71) Verstärkungsfäden (10) und eine Matrize (3) aufweist, in der diese Fäden (10) angeordnet sind, wobei das Verfahren die folgenden Punkte umfaßt :

a) man ordnet Verstärkungsfäden (10), die jeder für sich von einer Hülle (1) organischen Materials I umhüllt sind, an ;

b) man bewirkt das Eindringen eines organischen Materials II in die Hohlräume zwischen den Fäden (10), die vom Material I umhüllt sind, um diese Hohlräume mit dem Material II, das sich dabei in flüssigem oder pastösem Zustand befindet, auszufüllen ;

c) man bewirkt die Verfestigung des Materials II, welches sodann die Matrize (3) bildet, in der sich die Fäden (10), die vom Material I umhüllt sind, befinden ;

d) während des Eindringens und der Verfestigung dieses Materials II bleiben die Fäden (10) und deren Hüllen (1) aus Material I fest ;

e) das Material I klebt an den Fäden (10), die es umgibt und an der Matrize 3, mit der es in Kontakt ist ;

dieses Verfahren ist durch die folgenden Punkte gekennzeichnet :

f) für zumindest einen Teil der Verstärkungsfäden (10) stellt man eine Hülle (2) aus Material II für jeden einzelnen Faden 10, der vom Material I umhüllt ist, her ;

g) man ordnet dann diese Fäden (10), die jeder für sich vom Material I und II umhüllt sind, entsprechend an, um das Eindringen des Materials II in die Leerräume zwischen die vom Material I umhüllten Fäden (10) zu bewirken ;

h) die vom Material I umhüllten Fäden (10) sind so angeordnet, daß die Hüllen (1) aus Material I jeweils zweier benachbarter Verstärkungsfäden (10) am Ende des Einwanderns des Materials II miteinander in Kontakt sind.

2. Verfahren nach Anspruch 1, dadurch gekennzeichnet, daß das Material II sich in dem Moment, in dem man die Verstärkungsfäden (10) positioniert, in flüssigem oder pastösem Zustand befindet.

3. Verfahren nach einem der Ansprüche 1 oder 2, dadurch gekennzeichnet, daß die Gruppierung der Verstärkungsfäden (10) zumindest zum Teil durch Aufwickeln von Windungen eines Fadens (10) durchgeführt wird.

4. Verfahren nach Anspruch 3, dadurch gekennzeichnet, daß die Windungen in einer Ausnehmung (24) einer Trommel (23) aufgerollt werden.

5. Verfahren nach einem der Ansprüche 1 bis 4, dadurch gekennzeichnet, daß zumindest eines der Materialien I, II ein thermoplastisches Material ist.

6. Verfahren nach Anspruch 5, dadurch gekennzeichnet, daß die Materialien I und II thermoplastische Materialien sind, wobei die Schmelztemperatur des Materials I größer ist als die Schmelztemperatur des Materials II, und die Temperatur des Materials II während des Wanderns dieses Materials II größer ist als die Schmelztemperatur die des Materials II und kleiner ist als die Schmelztemperatur des Materials I.

7. Verfahren nach Anspruch 6, dadurch gekennzeichnet, daß die Materialien I und II zumindest teilweise Polyamide sind.

8. Verfahren nach Anspruch 7, bei dem das Material I zumindest zum Teil ein Polyamid 66 und das Material II zumindest zum Teil ein Polyamid 6 ist.

9. Verfahren nach einem der Ansprüche 1 bis 8, dadurch gekennzeichnet, daß das Verhältnis zwischen einerseits den Dehnmodul jedes Verstärkungsfadens (10) und anderseits den Kompressionsmodul des Materials I zumindest gleich 1 und höchstens gleich 300 ist, wobei diese Module bei 20 °C bestimmt werden.

10. Verfahren nach einem der Ansprüche 1 bis 9, dadurch gekennzeichnet, daß die Materialien I und II praktisch den gleichen Kompressionsmodul aufweisen, wobei dieser bei 20 °C bestimmt wird.

11. Verfahren nach einem der Ansprüche 1 bis 10, dadurch gekennzeichnet, daß man die zumindest teilweise Umhüllung der Fäden (10) und deren Anordnung kontinuierlich durchführt.

12. Verfahren, welches es erlaubt, ein komplexes Ensemble (60, 70, 80) zu erhalten, welches dazu bestimmt ist, einen Gegenstand (5) zu verstärken, dadurch gekennzeichnet, daß man zumindest zwei Ensembles (100, 71), die nach einem Verfahren gemäß einem der Patentansprüche 1 bis 11 erhalten worden sind, miteinander verbindet.

13. Verfahren nach Anspruch 12, dadurch gekennzeichnet, daß man die Ensemble (71) mit einer weiteren Hülle (75) aus organischem Material III umhüllt, daß man das Wandern des Materials III in die Hohlräume zwischen diesem Ensemble (71) bewirkt, um diese Hohlräume mit dem Material III, welches sich dabei in flüssigem oder pastösem Zustand befindet, auszufüllen und daß man die Verfestigung des Materials III bewirkt, welches sodann eine Matrize (72, 81) bildet, in der die Ensemble (71) sich befinden, die Hülle (1) aus Material I, die Matrizen (3) aus Material II und die Verstärkungsfäden (10) dieser Ensembles (71) während dieser Verfahrensschritte fest bleibend.

14. Verfahren nach Anspruch 13, dadurch gekennzeichnet, daß man für zumindest einen Teil der Ensemble (71) die Hülle (75) aus Material III auf jedem einzelnen dieser Ensembles (71) herstellt, und daß man diese einzeln vom Material III umhüllten Ensembles (71) entsprechend anordnet, um das Einwandern des Materials III in flüssigem oder pastösem Zustand in die zwischen den Ensembles (71) liegenden Hohlräume zu bewirken.

15. Ensemble (100, 71), dazu bestimmt, einen Gegenstand (5) zu verstärken, wobei dieses Ensemble (100, 71) welches Verstärkungsfäden (10) und eine Matrize (3) aufweist, in der diese Fäden (10) angeordnet sind und wobei das Ensemble die folgenden Punkte aufweist :

a) jeder einzelne dieser Fäden (10) von einer festen Hülle (1) aus organischem Material I umhüllt ist ;

b) diese vom Material I umhüllten Fäden (10) sind in der festen Matrize (3) angeordnet ;

c) die Matrize (3) besteht aus organischem Material, welches ausgehend von einem flüssigen oder pastösen organischen Material II erhalten wurde ;

d) die Matrize (3) füllt die Räume zwischen den mit Material I umhüllten Fäden (10) aus ;

e) das Material I klebt an den Fäden (10), die es umhüllt und an der Matrize (3), mit der es in Kontakt ist ;
dieses Ensemble wird durch die folgenden Punkte gekennzeichnet :

f) die Materialien I und II sind thermoplastische Materialien, der Schmelzpunkt des Materials I ist größer als der Schmelzpunkt des Materials II, das Material II kann sich bei einer Temperatur verfestigen, bei der die Hüllen (1) aus Material I und die Verstärkungsfäden (10) fest bleiben ;

g) die Fäden (10) sind so angeordnet, daß die Hüllen (1) aus Material I zweier benachbarter Verstärkungsfäden (10) miteinander in Kontakt stehen.

16. Ensemble (100, 71) nach Anspruch 15, dadurch gekennzeichnet, daß die Materialien I und II

11

zumindest teilweise aus Polyamiden bestehen.

17. Ensemble (100, 71) nach Anspruch 16, dadurch gekennzeichnet, daß das Material I zumindest zum Teil aus einem Polyamid 66 und das Material II zumindest zum Teil aus einem Polyamid 6 besteht.

18. Ensemble (100, 71) nach einem der Ansprüche 15 bis 17, dadurch gekennzeichnet, daß das Verhältnis zwischen einerseits den Dehnmodul jedes Verstärungsfädens (10) und andererseits dem Kompressionsmodul des Materials I zumindest gleich 1 und höchstens gleich 300 ist, wobei diese Module bei 20 °C bestimmt werden.

19. Ensemble (100, 71) nach einem der Ansprüche 15 bis 18, dadurch gekennzeichnet, daß die Materialien I und II praktisch den gleichen Kompressionsmodul bestimmt bei 20 °C aufweisen.

20. Komplexes Ensemble (60, 70, 80), dazu bestimmt, einen Gegenstand (5) zu verstärken, dadurch gekennzeichnet, daß es zumindest zwei verbundene Ensemble (100, 71) aufweist, wobei diese Ensemble (100, 71) einem der Ansprüche 15 bis 19 entsprechen.

21. Komplexes Ensemble (70, 80) nach Anspruch 20, dadurch gekennzeichnet, daß die Ensembles (71), die es enthält, in einer Matrize (72, 81) aus organischem Material angeordnet sind, die die Räume zwischen diesen Ensembles (71) füllt, wobei dieses organische Material ausgehend von einem organischen Material III erhalten wird, welches sich bei einer Temperatur verfestigen kann, bei der die Hüllen (1) aus Material I die Matrize (3) aus Material II und die Verstärkungsfäden (10) dieser Ensembles (71) fest bleiben.

22. Ensemble (100, 71) oder komplexes Ensemble (60, 70, 80) entsprechend einem der Ansprüche 15 bis 21, dadurch gekennzeichnet, daß es dazu bestimmt ist, einen Gegenstand (5) zu verstärken, der aus Kunststoff(en) oder Kautschuk(en) besteht.

23. Ensemble (100, 71) oder komplexes Ensemble (60, 70, 80) nach Anspruch 22, dadurch gekennzeichnet, daß es ein Kern, ein Kabel oder eine Einlage ist.

24. Artikel (5), verstärkt durch ein Ensemble (100, 71) und/oder ein komplexes Ensemble (60, 70, 80) nach einem der Ansprüche 15 bis 23.

25. Artikel (5) nach Anspruch 24, dadurch gekennzeichnet, daß es ein Luftreifen ist.

## Fig.1

## Fig.2

## Fig.3

Fig. 4

Fig. 5

Fig. 6

Fig.7

Fig.8

Fig. 9

Fig. 10

Fig. 11